# EUROPÄISCHE PATENTSCHRIFT

(11) **EP 4 337 592 B1**
(45) Veröffentlichungstag und Bekanntmachung des Hinweises auf die Patenterteilung: **09.07.2025**
(21) Anmeldenummer: 22725996.7
(22) Anmeldetag: 03.05.2022
(51) Int. Cl.: B66F 7/14, B66F 9/06, B66F 9/075, B62D 65/18, B65G 1/00

(54) **MOBILES TRANSPORTSYSTEM**
MOBILE TRANSPORT SYSTEM
SYSTÈME DE TRANSPORT MOBILE

(30) Priorität: 14.05.2021 CN 202110529778; 06.07.2021 DE 102021003471
(43) Veröffentlichungstag der Anmeldung: 20.03.2024
(73) Patentinhaber: SEW-EURODRIVE GmbH & Co. KG, 76646 Bruchsal (DE)
(72) Erfinder: WEIHUA, Ren, Tianjin (CN)
(86) Internationale Anmeldenummer: PCT/EP2022/025200
(87) Internationale Veröffentlichungsnummer: WO 2022/238004

(56) Entgegenhaltungen:
- WO-A1-2020/049960
- WO-A2-2008/151345
- WO-A2-2020/099899
- CN-A- 108 275 620
- CN-A- 108 975 220
- CN-U- 209 797 378

## Beschreibung

Die Erfindung betrifft ein mobiles Transportsystem zum Transport von Gegenständen in einer technischen Anlage, welches einen Mittelrahmen, einen Oberrahmen und eine Hubeinheit, mittels welcher der Oberrahmen relativ zu dem Mittelrahmen in die Vertikalrichtung bewegbar ist, umfasst.

In technischen Anlagen, beispielsweise in Produktionswerken, werden mobile Transportsysteme, insbesondere autonom fahrende mobile Transportsysteme, zum Transport von Gegenständen, beispielsweise Kleinteilen oder Kisten eingesetzt. Die besagten mobilen Transportsysteme bringen unter anderem Bauteile von Logistikbereichen, wie beispielsweise einem Materiallager, zu Arbeitsplätzen, wo die Bauteile verarbeitet werden. Mobile Transportsysteme sind in der Lage, leichte Steigungen oder Gefälle sowie kleine Bodenschwellen oder ähnliche Hindernisse zu überwinden.

Aus dem Dokument DE 10 2020 000 746 A1 ist ein fahrerloses Transportfahrzeug bekannt. Das fahrerlose Transportfahrzeug weist ein Fahrwerk mit einem Gestell auf, an welchem eine Schwinge gelagert ist. Das fahrerlose Transportfahrzeug umfasst ferner zwei Antriebräder und mehrere Stützrollen. Zum Anheben sowie zum Absenken von zu transportierenden Gegenständen weist das fahrerloses Transportfahrzeug eine Aufnahmeplatte auf, welche höhenverstellbar ist.

Aus der US 5,967,728 A ist ein Fahrzeug zum Transport von Gegenständen, insbesondere Paletten, bekannt. Das Fahrzeug umfasst mehrere Hubvorrichtungen, die von einem Motor antreibbar sind.

Aus der DE 29 37 411 A1 ist ein Fahrzeug zum Transport von Lasten mit hohem Gewicht bekannt. Das Fahrzeug umfasst mehrere Spindelantriebe und Spindeln.

Aus der DE 20 2014 103 371 U1 ist ein Selbstfahrendes Flurförderfahrzeug mit einer Hubeinrichtung für eine Transportpalette bekannt. Das Fahrzeug weist eine Hubeinrichtung zum Heben und Senken einer Lastaufnahme auf.

Aus der CN 103895995 B ist ein Fahrzeug zum Transport von Gegenständen bekannt.

Aus der CN 209797378 U ist ein Transportroboter gemäß dem Oberbegriff des Anspruchs 1 bekannt.

Aus der CN 108975220 A ist ein Transportroboter bekannt, welcher ein Hubwerk und eine ausfahrbare Gabel umfasst,

Aus der WO 2008/151345 A2 sind eine Vorrichtung zum automatischen Andocken von Anwendungsmodulen an eine Roboterplattform sowie eine Vorrichtung zum Bereitstellen und Transportieren von Anwendungsmodulen bekannt.

Aus der CN 108275620 A ist ein autonomes Fahrzeug bekannt, welches eine Hubeinreichung aufweist.

Aus der WO 2020/099899 A2 ist ein Transportroboter bekannt, welcher einen Rahmen und eine relativ zu dem Rahmen höhenverstellbare Plattform aufweist.

Aus der WO 2020/049960 A1 ist ein Transportfahrzeug bekannt, welches ein motorbetriebenes Hubwerk umfasst.

Der Erfindung liegt die Aufgabe zugrunde, ein mobiles Transportsystem zum Transport von Gegenständen weiterzubilden.

Die Aufgabe wird durch ein mobiles Transportsystem mit den im Anspruch 1 angegebenen Merkmalen gelöst. Vorteilhafte Ausgestaltungen und Weiterbildungen sind Gegenstand der Unteransprüche.

Ein erfindungsgemäßes mobiles Transportsystem zum Transport von Gegenständen in einer technischen Anlage umfasst einen Mittelrahmen, einen Oberrahmen und eine Hubeinheit, mittels welcher der Oberrahmen relativ zu dem Mittelrahmen in die Vertikalrichtung bewegbar ist. Dabei weist die Hubeinheit eine Mehrzahl von Hubvorrichtungen auf, wobei jede der Hubvorrichtungen jeweils eine Spindel und eine Spindelmutter, welche relativ zu der Spindel um eine Mittelachse drehbar ist, umfasst. Durch eine Drehung der Spindelmuttern um die Mittelachsen erfahren die Spindeln eine translatorische Bewegung in die Vertikalrichtung. Diese Bewegung der Spindeln wird als Hub bezeichnet.

Das erfindungsgemäße mobile Transportsystem ist in der Lage, verhältnismäßig schwere Lasten zu heben. Dabei ist die Hubeinheit robust und funktionssicher ausgeführt. Insbesondere sind verhältnismäßig große Querbelastungen und daraus resultierende Momente aufnehmbar, ohne Knicken der Spindeln oder der Spindelmuttern der Hubvorrichtungen zu riskieren. Die Erzeugung des Hubs durch Spindeln und Spindelmuttern ist auch sehr präzise.

Erfindungsgemäß umfasst die Hubeinheit einen Hubmotor, ein zentrales Getriebe, zwei seitliche Getriebe und eine Mehrzahl von Verbindungswellen. Das zentrale Getriebe überträgt eine Drehung einer Abtriebswelle des Hubmotors über zwei Verbindungswellen zu den beiden seitlichen Getrieben. Die beiden seitlichen Getriebe übertragen die besagte Drehung jeweils über zwei Verbindungswellen zu den Hubvorrichtungen, insbesondere auf die Spindelmuttern der Hubvorrichtungen. Es ist also nur ein Hubmotor zum synchronen Antrieb der Hubvorrichtungen vorgesehen. Somit ist eine gleichzeitige Hubbewegung aller Hubvorrichtungen sicher gestellt. Eine ungleichmäßige Hubbewegung aufgrund von fehlerhafter Synchronisierung von mehreren Hubmotoren ist ausgeschlossen.

Erfindungsgemäß umfasst die Hubeinheit zwei Ausgangswellen, welche jeweils mit einem der seitlichen Getriebe gekoppelt sind. Die Ausgangswellen durchgreifen dabei jeweils eine dafür vorgesehene Öffnung in dem Mittelrahmen. Die Ausgangswellen sind somit außerhalb des Mittelrahmens zugänglich. Bei einem Ausfall des Hubmotors sind die Ausgangswellen beispielsweise mittels Handkurbeln oder Akkuschraubern antreibbar, und die Hubeinheit ist manuell betätigbar.

Gemäß einer bevorzugten Ausgestaltung der Erfindung verlaufen die Mittelachsen der Spindeln der Hubvorrichtungen parallel zueinander in die Vertikalrichtung.

Gemäß einer vorteilhaften Ausgestaltung der Erfindung umfassen die Hubvorrichtungen jeweils ein Gehäuse, in welchem die Spindelmutter angeordnet ist. Dabei sind die Gehäuse der Hubvorrichtungen jeweils fest mit dem Mittelrahmen verbunden.

Gemäß einer vorteilhaften Weiterbildung der Erfindung ist an den dem Mittelrahmen abgewandten Enden der Spindeln der Hubvorrichtungen jeweils ein Befestigungsflansch angebracht. Die Befestigungsflansche der Hubvorrichtungen sind dabei an dem Oberrahmen befestigt.

Gemäß einer vorteilhaften Ausgestaltung der Erfindung sind der Hubmotor, das zentrale Getriebe und die seitlichen Getriebe jeweils mit dem Mittelrahmen fest verbunden. Dadurch ist die Festigkeit der Hubeinheit vorteilhaft erhöht.

Gemäß einer vorteilhaften Ausgestaltung der Erfindung rotiert die Abtriebswelle des Hubmotors um eine Achse, die zumindest annähernd in Längsrichtung verläuft, und welche das zentrale Getriebe antreibt. Die seitlichen Getriebe sind jeweils über eine Verbindungswelle mit dem zentralen Getriebe gekoppelt. Die besagten Verbindungswellen verlaufen jeweils in der Querrichtung von dem zentralen Getriebe bis zu den seitlichen Getrieben und sind an gegenüberliegenden Seiten des zentralen Getriebes angebracht. Die seitlichen Getriebe sind jeweils über zwei Verbindungswellen mit jeweils zwei der Hubvorrichtungen gekoppelt. Die besagten Verbindungswellen verlaufen jeweils in der Längsrichtung von den seitlichen Getrieben bis zu den Hubvorrichtungen und sind an gegenüberliegenden Seiten der seitlichen Getriebe angebracht. Dadurch weist die Hubeinheit nur eine verhältnismäßig geringe Ausdehnung in Vertikalrichtung auf, ist also relativ flach.

Gemäß einer vorteilhaften Weiterbildung der Erfindung umfasst das mobile Transportsystem einen Hubsensor zur Erfassung eines Hubs der Hubeinheit und/oder der Hubvorrichtungen. Damit ist eine Regelung der Hubhöhe, insbesondere zur Anpassung an Höhen von anderen Modulen, ermöglicht.

Gemäß einer vorteilhaften Ausgestaltung der Erfindung weist das mobile Transportsystem eine Empfangseinheit auf, zu welcher Energie induktiv von einer Ladeeinheit übertragbar ist. Die Ladeeinheit ist beispielsweise als linienförmiger Leiter oder als Spule ausgebildet und befindet sich stationär in dem Boden. Die von der Ladeeinheit zu der Empfangseinheit induktiv übertragene Energie dient beispielsweise zum Laden eines elektrischen Energiespeichers des mobilen Transportsystems.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
Figur 1: eine perspektivische Darstellung eines mobilen Transportsystems,
Figur 2: eine perspektivische Darstellung von Strukturteilen eines mobilen Transportsystems,
Figur 3: eine perspektivische Darstellung einer Hubeinheit des mobilen Transportsystems,
Figur 4: eine perspektivische Darstellung eines Mittelrahmens,
Figur 5: eine perspektivische Darstellung eines Fahrwerks des mobilen Transportsystems,
Figur 6: eine Ansicht einer Unterseite des mobilen Transportsystems und
Figur 7: eine Seitenansicht eines Fahrwerks des mobilen Transportsystems.

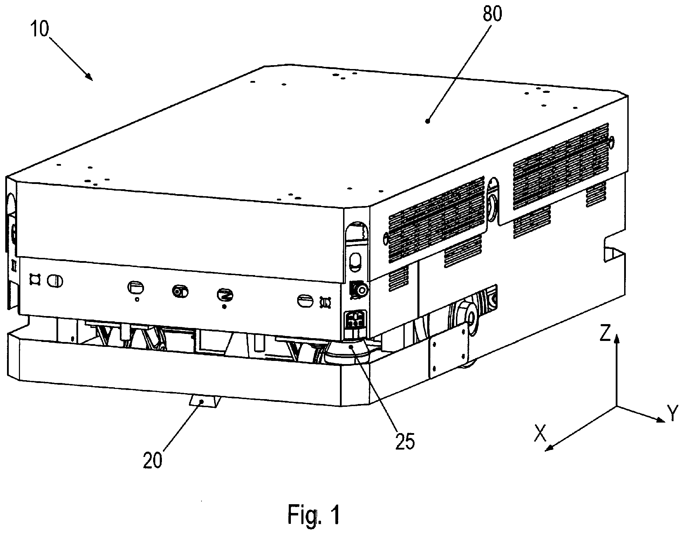

Figur 1 zeigt eine perspektivische Darstellung eines mobilen Transportsystems 10. Das mobile Transportsystem 10 dient vorliegend zum Transport von Gegenständen in einer technischen Anlage. Bei der technischen Anlage handelt es sich um eine industrielle Anwendung, beispielsweise ein Produktionswerk. Das Transportsystem 10 dient beispielsweise auch zur Lieferung von Waren zu einem Wohnhaus eines privaten Empfängers in einer Stadt oder in einem Wohngebiet. Bei dem mobilen Transportsystem 10 handelt es sich vorliegend um ein autonom fahrendes Fahrzeug.

Das mobile Transportsystem 10 befindet sich in der hier gezeigten Darstellung auf einem ebenen Boden. Eine Längsrichtung X entspricht dabei zumindest annähernd der gewöhnlichen Fahrtrichtung des mobilen Transportsystems 10. Eine Querrichtung Y verläuft rechtwinklig zu der Längsrichtung X. Die Längsrichtung X und die Querrichtung Y stellen horizontale Richtungen dar und verlaufen parallel zu dem Boden, auf welchem das mobile Transportsystem 10 sich befindet. Eine Vertikalrichtung Z steht senkrecht auf dem Boden und verläuft somit rechtwinklig zu der Längsrichtung X und rechtwinklig zu der Querrichtung Y. Jede Richtung rechtwinklig zu der Vertikalrichtung Z stellt eine horizontale Richtung dar.

Das mobile Transportsystem 10 weist eine zumindest annähernd quaderförmige Gestalt auf. Eine dem Boden abgewandte Oberfläche 80 des mobilen Transportsystems 10 erstreckt sich zumindest annähernd parallel zu dem Boden und damit rechtwinklig zu der Vertikalrichtung Z. Die Oberfläche 80 dient zur Aufnahme von zu transportierenden Gegenständen. Das mobile Transportsystem 10 umfasst eine Mehrzahl von Verkleidungsteilen und Abdeckungen, welche in der hier gezeigten Darstellung innenliegende Komponenten weitgehend verdecken.

Das mobile Transportsystem 10 weist eine Empfangseinheit 20 auf, zu welcher Energie induktiv von einer Ladeeinheit übertragbar ist. Die Ladeeinheit ist beispielsweise als linienförmiger Leiter oder als Spule ausgebildet. Die von der Ladeeinheit zu der Empfangseinheit 20 induktiv übertragene Energie dient beispielsweise zum Laden eines elektrischen Energiespeichers des mobilen Transportsystems 10. Die Empfangseinheit 20 befindet sich in einem zentralen Bereich an einer Frontseite des mobile Transportsystems 10.

Das mobile Transportsystem 10 weist ferner mehrere Laserscanner 25 auf. Die Laserscanner 25 sind insbesondere in einem Eckereich der Frontseite und einer Längsseite sowie in einem Eckereich einer Rückseite und einer Längsseite angeordnet. Die Laserscanner 25 dienen zur Erkennung von Hindernissen sowie zur Navigation des mobilen Transportsystems 10 innerhalb der technischen Anlage.

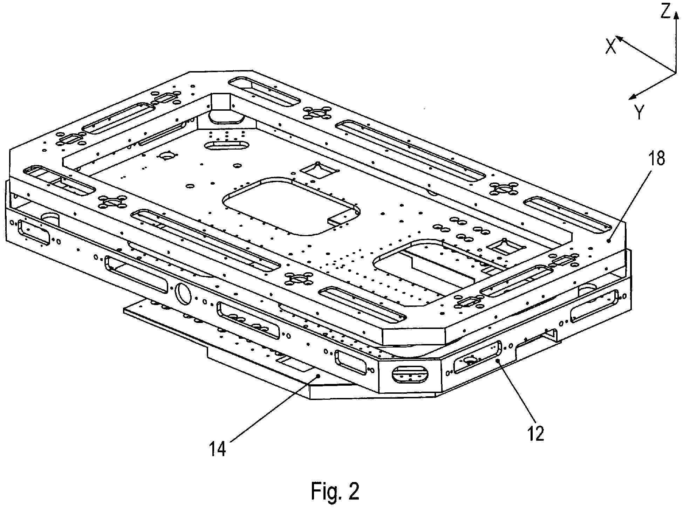

Figur 2 zeigt eine perspektivische Darstellung von Strukturteilen des mobilen Transportsystems 10. Das mobile Transportsystem 10 umfasst einen Unterrahmen 14, einen Mittelrahmen 12 und einen Oberrahmen 18. Die besagten Rahmen 12, 14, 18 sind verhältnismäßig flach ausgebildet und erstrecken sich vorwiegend in die Längsrichtung X sowie die Querrichtung Y. Die besagten Rahmen 12, 14, 18 weisen also jeweils nur eine verhältnismäßig geringe Ausdehnung in die Vertikalrichtung Z auf. Die Rahmen 12, 14, 18 sind in der Vertikalrichtung Z übereinander angeordnet.

Der Unterrahmen 14 ist dabei dem Boden zugewandt angeordnet. Der Oberrahmen 18 ist dem Boden abgewandt angeordnet. Der Mittelrahmen 12 ist in der Vertikalrichtung Z zwischen dem Unterrahmen 14 und dem Oberrahmen 18 angeordnet. Die besagten Rahmen 12, 14, 18 sind mechanisch miteinander verbunden, wie nachfolgend näher erläutert wird. Dabei ist der Oberrahmen 18 relativ zu dem Mittelrahmen 12 beweglich gelagert. Auch ist der Unterrahmen 14 relativ zu dem Mittelrahmen 12 beweglich gelagert.

Der Unterrahmen 14, der Mittelrahmen 12 und der Oberrahmen 18 sind jeweils aus eine Metall gefertigt. Die besagten Rahmen 12, 14, 18 weisen jeweils eine Vielzahl von Öffnungen und Durchbrüchen auf. Diese Öffnungen und Durchbrüche dienen teilweise zur Befestigung von Komponenten. Die Öffnungen und Durchbrüche verbessern ferner eine Luftzirkulation in dem mobilen Transportsystem 10 und verbessern somit die Abfuhr von Wärme.

Bei der Fertigung des mobilen Transportsystems 10 werden zunächst die einzelnen Rahmen 12, 14, 18 vorgefertigt. Dabei werden die jeweils erforderlichen Komponenten an den einzelnen Rahmen 12, 14, 18 montiert. Anschließend werden die vorgefertigten Rahmen 12, 14, 18 miteinander verbunden.

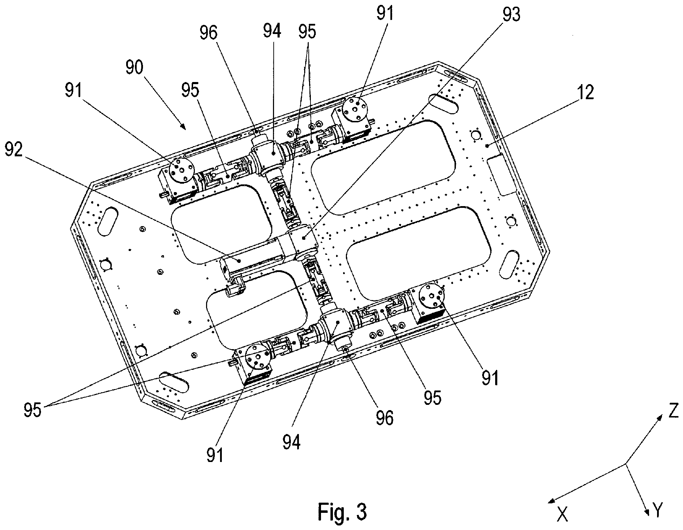

Figur 3 zeigt eine perspektivische Darstellung einer Hubeinheit 90 des mobilen Transportsystems 10. Die Hubeinheit 90 umfasst mehrere Komponenten, welche mit dem Mittelrahmen 12 verbunden sind. Die Hubeinheit 90 ist auf einer dem Oberrahmen 18 zugewandten Seite des Mittelrahmens 12 angeordnet. Über die besagte Hubeinheit 90 ist der hier nicht dargestellte Oberrahmen 18 mit dem Mittelrahmen 12 verbunden. Mittels der Hubeinheit 90 ist der Oberrahmen 18 relativ zu dem Mittelrahmen 12 in die Vertikalrichtung Z bewegbar.

Die Hubeinheit 90 weist mehrere, vorliegend vier, Hubvorrichtungen 91 auf. Jede der Hubvorrichtungen 91 umfasst jeweils eine Spindel und eine Spindelmutter, welche relativ zu der Spindel um eine Mittelachse drehbar ist. Die Spindeln und Spindelmuttern der Hubvorrichtungen 91 sind in dieser Darstellung verdeckt. Die Mittelachsen der Spindeln der Hubvorrichtungen 91 verlaufen parallel zueinander in die Vertikalrichtung Z. Die Hubvorrichtungen 91 umfassen jeweils ein Gehäuse, in welchem die Spindelmutter angeordnet ist. Die besagten Gehäuse der Hubvorrichtungen 91 sind jeweils fest mit dem Mittelrahmen 12 verbunden.

An den dem Mittelrahmen 12 abgewandten Enden der Spindeln ist jeweils ein Befestigungsflansch angebracht. Die Befestigungsflansche dienen zur Befestigung der Hubvorrichtungen 91 mit dem hier nicht dargestellte Oberrahmen 18. Durch eine Drehung der Spindelmuttern um die Mittelachsen erfahren die Spindeln eine translatorische Bewegung in die Vertikalrichtung Z. Dadurch werden auch die Befestigungsflansche und der Oberrahmen 18 in die Vertikalrichtung Z bewegt.

Die Hubeinheit 90 umfasst ferner einen Hubmotor 92, ein zentrales Getriebe 93, zwei seitliche Getriebe 94 und mehrere, vorliegend sechs, Verbindungswellen 95. Der Hubmotor 92 ist mit dem Mittelrahmen 12 fest verbunden. Eine Abtriebswelle des Hubmotors 92 rotiert um eine Achse, die zumindest annähernd in Längsrichtung X verläuft, und treibt dabei das zentrale Getriebe 93 an.

Das zentrale Getriebe 93 ist mit dem Mittelrahmen 12 fest verbunden. Die seitlichen Getriebe 94 sind ebenfalls mit dem Mittelrahmen 12 fest verbunden. Die seitlichen Getriebe 94 sind jeweils über eine Verbindungswelle 95 mit dem zentralen Getriebe 93 gekoppelt. Die besagten Verbindungswellen 95 sind dabei an gegenüberliegenden Seiten des zentralen Getriebes 93 angebracht. Die besagten Verbindungswellen 95 verlaufen jeweils in der Querrichtung Y von dem zentralen Getriebe 93 bis zu den seitlichen Getrieben 94.

Die seitlichen Getriebe 94 sind jeweils über zwei Verbindungswellen 95 mit jeweils zwei der Hubvorrichtungen 91 gekoppelt. Die besagten Verbindungswellen 95 sind dabei an gegenüberliegenden Seiten der seitlichen Getriebe 94 angebracht. Die besagten Verbindungswellen 95 verlaufen jeweils in der Längsrichtung X von den seitlichen Getrieben 94 bis zu den Hubvorrichtungen 91.

Das zentrale Getriebe 93 überträgt die Drehung der Abtriebswelle des Hubmotors 92 über die zwei Verbindungswellen 95, welche in der Querrichtung Y verlaufen, zu den beiden seitlichen Getrieben 94. Die beiden seitlichen Getriebe 94 übertragen die besagte Drehung jeweils über zwei Verbindungswellen 95, welche in der Längsrichtung X verlaufen, zu den Hubvorrichtungen 91, insbesondere auf die Spindelmuttern der Hubvorrichtungen 91.

Wenn die Abtriebswelle des Hubmotors 92 rotiert, so werden die Spindelmuttern der Hubvorrichtungen 91 über die Getriebe 93, 94 und die Verbindungswellen 95 rotatorisch angetrieben. Dadurch erfahren die Spindeln, wie bereits erwähnt eine translatorische Bewegung in die Vertikalrichtung Z. Dadurch werden auch die Befestigungsflansche und der Oberrahmen 18 in die Vertikalrichtung Z bewegt.

Die Hubeinheit 90 umfasst ferner zwei Ausgangswellen 96. Die Ausgangswellen 96 sind jeweils mit einem der seitlichen Getriebe 94 gekoppelt. Die besagten Ausgangswellen 96 sind jeweils an den Seiten der seitlichen Getriebe 94 angebracht, welche dem zentrale Getriebe 93 gegenüberliegen. Die Ausgangswellen 96 verlaufen jeweils in der Querrichtung Y und durchgreifen jeweils eine dafür vorgesehene Öffnung in dem Mittelrahmen 12. Die Ausgangswellen 96 sind somit außerhalb des Mittelrahmens 12 zugänglich und beispielsweise mittels Handkurbeln oder Akkuschraubern antreibbar.

Wenn die Ausgangswellen 96 rotatorisch angetrieben werden, so werden die Spindelmuttern der Hubvorrichtungen 91 über die seitlichen Getriebe 94 und die Verbindungswellen 95 rotatorisch angetrieben. Dadurch erfahren die Spindeln, wie bereits erwähnt eine translatorische Bewegung in die Vertikalrichtung Z. Dadurch werden auch die Befestigungsflansche und der Oberrahmen 18 in die Vertikalrichtung Z bewegt.

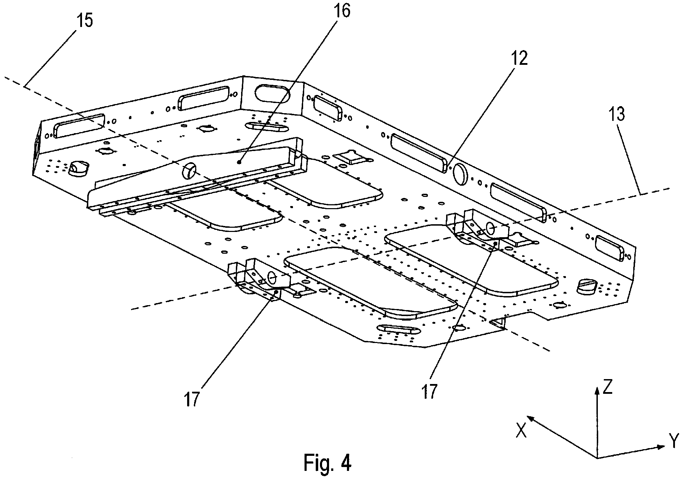

Figur 4 zeigt eine perspektivische Darstellung eines Mittelrahmens 12 des mobilen Transportsystems 10. In dieser Darstellung ist eine dem Oberrahmen 18 abgewandten Seite des Mittelrahmens 12 gezeigt. Ein Kipphebel 16 ist um eine Kippachse 15 relativ zu dem Mittelrahmen 12 schwenkbar. Die Kippachse 15 verläuft dabei in die Längsrichtung X auf der dem Oberrahmen 18 abgewandten Seite des Mittelrahmens 12.

Zwei Pendelhebel 17 sind um eine gemeinsame Pendelachse 13 relativ zu dem Mittelrahmen 12 schwenkbar. Die Pendelachse 13 verläuft dabei in die Querrichtung Y auf der dem Oberrahmen 18 abgewandten Seite des Mittelrahmens 12. Der hier nicht dargestellte Unterrahmen 14 ist an den Pendelhebeln 17 befestigt. Der Unterrahmen 14 ist somit um die Pendelachse 13 relativ zu dem Mittelrahmen 12 schwenkbar.

Die Kippachse 15 und die Pendelachse 13 verlaufen somit rechtwinklig zueinander. Die Kippachse 15 und die Pendelachse 13 liegen in der Vertikalrichtung Z in einer Ebene. Somit schneiden sich die Kippachse 15 und die Pendelachse 13.

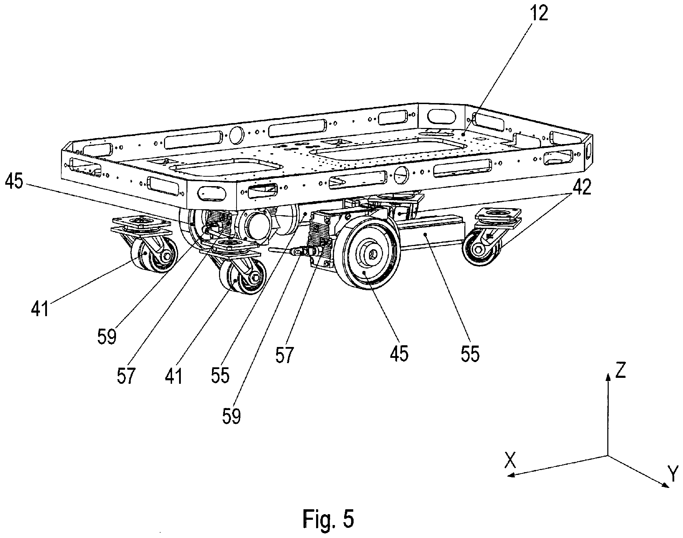

Figur 5 zeigt eine perspektivische Darstellung eines Fahrwerks des mobilen Transportsystems 10. Der Unterrahmen 14, der Kipphebel 16 ist und die Pendelhebel 17 sind dabei nicht dargestellt. Auch die Hubeinheit 90 ist nicht dargestellt. Das mobile Transportsystem 10 befindet sich dabei auf einem ebenen Boden.

An dem hier nicht dargestellten Kipphebel 16 sind zwei erste Stützräder 41 befestigt. Die ersten Stützräder 41 sind in der Querrichtung Y versetzt zueinander angeordnet. Die ersten Stützräder 41 weisen jeweils zwei nebeneinander angeordnete Rollen auf. Die ersten Stützräder 41 sind jeweils um eine in die Vertikalrichtung Z verlaufende erste Schwenkachse relativ zu dem Kipphebel 16 schwenkbar. Die ersten Stützräder 41 sind ferner jeweils um eine in eine horizontale Richtung verlaufende erste Drehachse relativ zu dem Kipphebel 16 drehbar gelagert. Die erste Schwenkachse und die erste Drehachse eines ersten Stützrades 41 schneiden sich vorliegend nicht. In Abhängigkeit von einer Schwenkung der ersten Stützräder 41 um die erste Schwenkachse verlaufen die ersten Drehachsen beispielsweise in Längsrichtung X, in Querrichtung Y oder in eine andere horizontale Richtung.

An dem hier nicht dargestellten Unterrahmen 14 sind zwei zweite Stützräder 42 befestigt. Die zweiten Stützräder 42 sind in der Querrichtung Y versetzt zueinander angeordnet. Die zweiten Stützräder 42 weisen jeweils zwei nebeneinander angeordnete Rollen auf. Die zweiten Stützräder 42 sind jeweils um eine in die Vertikalrichtung Z verlaufende zweite Schwenkachse relativ zu dem Unterrahmen 14 schwenkbar. Die zweiten Stützräder 42 sind ferner jeweils um eine in eine horizontale Richtung verlaufende zweite Drehachse relativ zu dem Unterrahmen 14 drehbar gelagert. Die zweite Schwenkachse und die zweite Drehachse eines zweiten Stützrades 42 schneiden sich vorliegend nicht. In Abhängigkeit von einer Schwenkung der zweiten Stützräder 42 um die zweite Schwenkachse verlaufen die zweiten Drehachsen beispielsweise in Längsrichtung X, in Querrichtung Y oder in eine andere horizontale Richtung.

An dem hier nicht dargestellten Unterrahmen 14 sind ferner zwei Antriebsräder 45 befestigt. Die Antriebsräder 45 sind in der Querrichtung Y versetzt zueinander angeordnet. Die Antriebsräder 45 sind jeweils um eine in Querrichtung Y verlaufende Antriebsachse relativ zu dem Unterrahmen 14 drehbar gelagert. Die Antriebsachsen der Antriebsräder 45 fluchten vorliegend miteinander.

Das mobile Transportsystem 10 umfasst zwei Antriebsmotoren 55 und zwei Fahrgetriebe 57. Dabei sind jedem der Antriebsräder 45 jeweils ein Antriebsmotor 55 und ein Fahrgetriebe 57 zugeordnet. Mittels der Antriebsmotoren 55 sind die Antriebsräder 45 unabhängig voneinander antreibbar. Die Antriebsmotoren 55 treiben jeweils eines der Antriebsräder 45 über eines der Fahrgetriebe 57 rotatorisch an. Das mobile Transportsystem 10 umfasst ferner einen hier nicht dargestellten elektrischen Energiespeicher zur Versorgung der Antriebsmotoren 55. Das mobile Transportsystem 10 umfasst auch eine hier nicht dargestellte Steuereinrichtung zur Steuerung der Antriebsmotoren 55.

An jedem der Fahrgetriebe 57 ist jeweils ein Freigabehebel 59 angebracht. Mittels des Freigabehebels 59 ist das jeweilige Fahrgetriebe 57 mechanisch von dem zugehörigen Antriebsmotor 55 trennbar, sowie mit dem zugehörigen Antriebsmotor 55 mechanisch koppelbar. Wenn einer der Antriebsmotoren 55 von dem zugehörigen Fahrgetriebe 57 getrennt ist, so ist das zugeordnete Antriebsrad 45 frei drehbar.

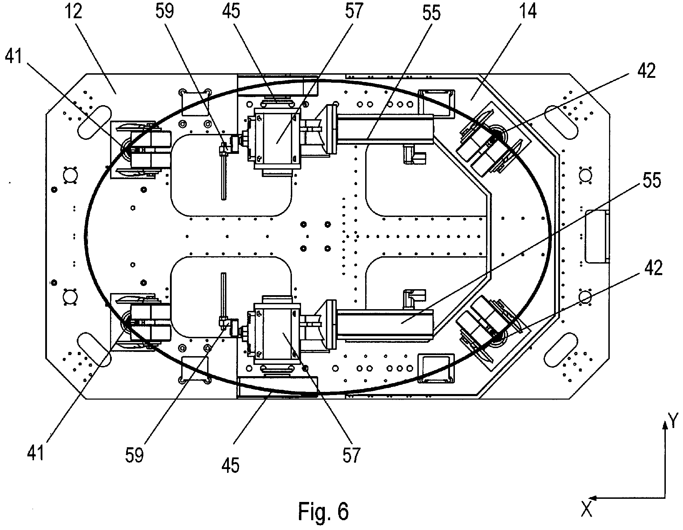

Figur 6 zeigt eine Ansicht einer Unterseite des mobilen Transportsystems 10. Der Unterrahmen 14 ist dabei semitransparent dargestellt. Der Kipphebel 16 ist nicht dargestellt. Ein Abstand der Antriebsräder 45 zueinander in Querrichtung Y ist größer als ein Abstand der ersten Stützräder 41 zueinander in Querrichtung Y. Ein Abstand der Antriebsräder 45 zueinander in Querrichtung Y ist auch größer als ein Abstand der zweiten Stützräder 42 zueinander in Querrichtung Y. Die sechs Räder 41, 42, 45 sind vorliegend in Form einer Ellipse angeordnet. Die besagte Ellipse ist symmetrisch zu einer Längsachse ausgebildet, welche in die Längsrichtung X verläuft.

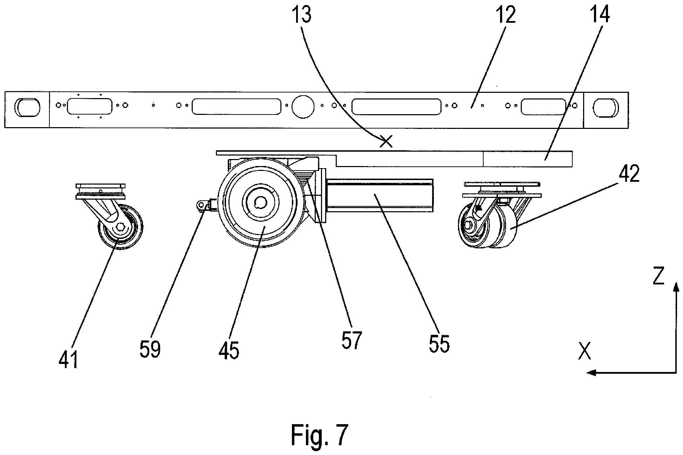

Figur 7 zeigt eine Seitenansicht des Fahrwerks des mobilen Transportsystems 10. Der Kipphebel 16 sowie die Pendelhebel 17 sind dabei nicht dargestellt. Die ersten Stützräder 41 sind mittels hier nicht dargestellter Adapter an dem Kipphebel 16 befestigt. Die zweiten Stützräder 42 sind mittels hier nicht dargestellter Adapter an dem Unterrahmen 14 befestigt.

Die Antriebsräder 45 sind in der Längsrichtung X zwischen den ersten Stützrädern 41 und den zweiten Stützrädern 42 angeordnet. Die Pendelachse 13 befindet sich in der Längsrichtung X zwischen den Antriebsrädern 45 und den zweiten Stützrädern 42.

Vorliegend ist ein Abstand der zweiten Stützräder 42 in Längsrichtung X zu der Pendelachse 13 annähernd gleich einem Abstand der Antriebsräder 45 in Längsrichtung X zu der Pendelachse 13. Der Abstand der zweiten Stützräder 42 zu der Pendelachse 13 in Längsrichtung X entspricht dabei dem Abstand der zweiten Schwenkachsen zu der Pendelachse 13 in Längsrichtung X. Der Abstand der Antriebsräder 45 zu der Pendelachse 13 in Längsrichtung X entspricht dem Abstand der Antriebsachsen zu der Pendelachse 13 in Längsrichtung X.

Vorliegend ist ein Abstand der zweiten Stützräder 42 in Längsrichtung X zu den Antriebsrädern 45 größer als ein Abstand der ersten Stützräder 41 in Längsrichtung X zu den Antriebsrädern 45. Der Abstand der ersten Stützräder 41 zu den Antriebsrädern 45 in Längsrichtung X entspricht dem Abstand der ersten Schwenkachsen zu den Antriebsachsen in Längsrichtung X. Der Abstand der zweiten Stützräder 42 zu den Antriebsrädern 45 in Längsrichtung X entspricht dem Abstand der zweiten Schwenkachsen zu den Antriebsachsen in Längsrichtung X.

Vorliegend entspricht ein Abstand der ersten Stützräder 41 in Längsrichtung X zu den Antriebsrädern 45 etwa 40% des Abstandes der ersten Stützräder 41 in Längsrichtung X zu den zweiten Stützrädern 42. Vorliegend entspricht ein Abstand der zweiten Stützräder 42 in Längsrichtung X zu den Antriebsrädern 45 etwa 60% des Abstandes der ersten Stützräder 41 in Längsrichtung X zu den zweiten Stützrädern 42. Der Abstand der ersten Stützräder 41 zu den zweiten Stützrädern 42 in Längsrichtung X entspricht dem Abstand der ersten Schwenkachsen zu den zweiten Schwenkachsen in Längsrichtung X.

### Bezugszeichenliste

- 10: Mobiles Transportsystem
- 12: Mittelrahmen
- 13: Pendelachse
- 14: Unterrahmen
- 15: Kippachse
- 16: Kipphebel
- 17: Pendelhebel
- 18: Oberrahmen
- 20: Empfangseinheit
- 25: Laserscanner
- 41: erstes Stützrad
- 42: zweites Stützrad
- 45: Antriebsrad
- 55: Antriebsmotor
- 57: Fahrgetriebe
- 59: Freigabehebel
- 80: Oberfläche
- 90: Hubeinheit
- 91: Hubvorrichtung
- 92: Hubmotor
- 93: zentrales Getriebe
- 94: seitliches Getriebe
- 95: Verbindungswelle
- 96: Ausgangswelle
- X: Längsrichtung
- Y: Querrichtung
- Z: Vertikalrichtung

## Patentansprüche

1. Mobiles Transportsystem (10), zum Transport von Gegenständen in einer technischen Anlage, umfassend
einen Mittelrahmen (12), einen Oberrahmen (18) und
eine Hubeinheit (90), mittels welcher der Oberrahmen (18) relativ zu dem Mittelrahmen (12) in die Vertikalrichtung (Z) bewegbar ist,
wobei die Hubeinheit (90) eine Mehrzahl von Hubvorrichtungen (91) aufweist, wobei jede der Hubvorrichtungen (91) jeweils eine Spindel und eine Spindelmutter, welche relativ zu der Spindel um eine Mittelachse drehbar ist, umfasst, und wobei
durch eine Drehung der Spindelmuttern um die Mittelachsen die Spindeln eine translatorische Bewegung in die Vertikalrichtung (Z) erfahren, und wobei
die Hubeinheit (90) einen Hubmotor (92), ein zentrales Getriebe (93), zwei seitliche Getriebe (94) und eine Mehrzahl von Verbindungswellen (95) umfasst, wobei
das zentrale Getriebe (93) eine Drehung einer Abtriebswelle des Hubmotors (92) über zwei Verbindungswellen (95) zu den beiden seitlichen Getrieben (94) überträgt, und wobei die beiden seitlichen Getriebe (94) die besagte Drehung jeweils über zwei Verbindungswellen (95) zu den Hubvorrichtungen (91), insbesondere auf die Spindelmuttern der Hubvorrichtungen (91), übertragen, und **dadurch gekennzeichnet, dass**
die Hubeinheit (90) zwei Ausgangswellen (96) umfasst,
welche jeweils mit einem der seitlichen Getriebe (94) gekoppelt sind, wobei die Ausgangswellen (96) jeweils eine dafür vorgesehene Öffnung in dem Mittelrahmen (12) durchgreifen.

2. Mobiles Transportsystem (10) nach Anspruch 1,
**dadurch gekennzeichnet, dass**
die Mittelachsen der Spindeln der Hubvorrichtungen (91) parallel zueinander in die Vertikalrichtung (Z) verlaufen.

3. Mobiles Transportsystem (10) nach einem der vorangegangenen Ansprüche,
**dadurch gekennzeichnet, dass**
die Hubvorrichtungen (91) jeweils ein Gehäuse umfassen, in welchem die Spindelmutter angeordnet ist, und dass
die Gehäuse der Hubvorrichtungen (91) jeweils fest mit dem Mittelrahmen (12) verbunden sind.

4. Mobiles Transportsystem (10) nach einem der vorangegangenen Ansprüche,
**dadurch gekennzeichnet, dass**
an den dem Mittelrahmen (12) abgewandten Enden der Spindeln der Hubvorrichtungen (91) jeweils ein Befestigungsflansch angebracht ist, und dass
die Befestigungsflansche der Hubvorrichtungen (91) an dem Oberrahmen (18) befestigt sind.

5. Mobiles Transportsystem (10) nach einem der vorangegangenen Ansprüche,
**dadurch gekennzeichnet, dass**
der Hubmotor (92), das zentrale Getriebe (93) und die seitlichen Getriebe (94) jeweils mit dem Mittelrahmen (12) fest verbunden sind.

6. Mobiles Transportsystem (10) nach einem der vorangegangenen Ansprüche,
**dadurch gekennzeichnet, dass**
die Abtriebswelle des Hubmotors (92) um eine Achse rotiert, die zumindest annähernd in Längsrichtung (X) verläuft, und welche das zentrale Getriebe (93) antreibt, dass die seitlichen Getriebe (94) jeweils über eine Verbindungswelle (95) mit dem zentralen Getriebe (93) gekoppelt sind, dass
die besagten Verbindungswellen (95) jeweils in der Querrichtung (Y) von dem zentralen Getriebe (93) bis zu den seitlichen Getrieben (94) verlaufen und an gegenüberliegenden Seiten des zentralen Getriebes (93) angebracht sind, dass
die seitlichen Getriebe (94) jeweils über zwei Verbindungswellen (95) mit jeweils zwei der Hubvorrichtungen (91) gekoppelt sind, und dass
die besagten Verbindungswellen (95) jeweils in der Längsrichtung (X) von den seitlichen Getrieben (94) bis zu den Hubvorrichtungen (91) verlaufen und an gegenüberliegenden Seiten der seitlichen Getriebe (94) angebracht sind.

7. Mobiles Transportsystem (10) nach einem der vorangegangenen Ansprüche,
**dadurch gekennzeichnet, dass**
das mobile Transportsystem (10) einen Hubsensor zur Erfassung eines Hubs der Hubeinheit (90) und/oder der Hubvorrichtungen (91) umfasst.

8. Mobiles Transportsystem (10) nach einem der vorangegangenen Ansprüche,
**dadurch gekennzeichnet, dass**
das mobile Transportsystem (10) eine Empfangseinheit (20) aufweist, zu welcher Energie induktiv von einer Ladeeinheit übertragbar ist.

## Claims

1. A mobile transport system (10) for transporting objects in a technical facility, comprising a middle frame (12), an upper frame (18) and a lifting unit (90) by means of which the upper frame (18) is movable in the vertical direction (Z) relative to the middle frame (12),
wherein
the lifting unit (90) has a plurality of lifting devices (91), wherein each of the lifting devices (91) in each case comprises a spindle and a spindle nut which is rotatable about a central axis relative to the spindle, and wherein through a rotation of the spindle nuts about the central axes, the spindles experience a translational motion in the vertical direction (Z), and wherein the lifting unit (90) comprises a lifting motor (92), a central gear unit (93), two lateral gear units (94) and a plurality of connecting shafts (95),
wherein the central gear unit (93) transfers a rotation of a driven shaft of the lifting motor (92) to the two lateral gear units (94) via two connecting shafts (95), and wherein the two lateral gear units (94) transfer the aforesaid rotation to the lifting devices (91), in particular to the spindle nuts of the lifting devices (91), via two connecting shafts (95) in each case, and **characterised in that** the lifting unit (90) comprises two output shafts (96) which in each case are coupled with one of the lateral gear units (94), wherein the output shafts (96) in each case reach through an opening provided for this purpose in the middle frame (12).

2. A mobile transport system (10) according to claim 1,
**characterised in that**
the central axes of the spindles of the lifting devices (91) run parallel to one another in the vertical direction (Z).

3. A mobile transport system (10) according to any one of the preceding claims
**characterised in that**
the lifting devices (91) comprise in each case a housing in which the spindle nut is arranged, and **in that** the housings of the lifting devices (91) are in each case securely connected to the middle frame (12).

4. A mobile transport system (10) according to any one of the preceding claims,
**characterised in that**
a respective securing flange is attached to the ends, remote from the middle frame (12), of the spindles of the lifting devices (91), and **in that** the securing flanges of the lifting devices (91) are secured to the upper frame (18).

5. A mobile transport system (10) according to any one of the preceding claims,
**characterised in that**
the lifting motor (92), the central gear unit (93) and the lateral gear units (94) are in each case securely connected to the middle frame (12).

6. A mobile transport system (10) according to any one of the preceding claims,
**characterised in that**
the driven shaft of the lifting motor (92) rotates about an axis, which runs at least substantially in a longitudinal direction (X), and drives the central gear unit (93), **in that** the lateral gear units (94) are in each case coupled with the central gear unit (93) via a connecting shaft (95), **in that** the aforesaid connecting shafts (95) in each case run in the transverse direction (Y) from the central gear unit (93) as far as the lateral gear units (94) and are attached to opposite sides of the central gear unit (93), **in that** the lateral gear units (94) are coupled, via two connecting shafts (95) in each case, with two of the lifting devices (91) in each case, and **in that** the aforesaid connecting shafts (95) in each case run in the longitudinal direction (X) from the lateral gear units (94) as far as the lifting devices (91) and are attached to opposite sides of the lateral gear units (94).

7. A mobile transport system (10) according to any one of the preceding claims,
**characterised in that**
the mobile transport system (10) comprises a lift sensor for determining a lift of the lifting unit (90) and/or the lifting devices (91).

8. A mobile transport system (10) according to any one of the preceding claims,
**characterised in that**
the mobile transport system (10) has a receiving unit (20) to which energy can be transmitted inductively from a charging unit.

## Revendications

1. Système mobile de transport (10) conçu pour transporter des objets dans une installation technique, comprenant
un châssis intermédiaire (12), un châssis supérieur (18) et
une unité de levage (90) au moyen de laquelle ledit châssis supérieur (18) peut être mû dans la direction verticale (Z) par rapport audit châssis intermédiaire (12),
sachant que
ladite unité de levage (90) est munie d'une pluralité de dispositifs élévateurs (91),
chacun desdits dispositifs élévateurs (91) étant respectivement doté d'une broche et d'un écrou de broche apte à tourner par rapport à ladite broche, autour d'un axe médian, sachant que les broches sont animées d'un mouvement de translation, dans la direction verticale (Z), sous l'effet d'une rotation des écrous de broches autour des axes médians, sachant que
l'unité de levage (90) inclut un moteur de levage (92), une transmission centrale (93), deux transmissions latérales (94) et une pluralité d'arbres de liaison (95), sachant que
ladite transmission centrale (93) retransmet une rotation d'un arbre mené dudit moteur de levage (92) aux deux transmissions latérales (94), par l'intermédiaire de deux arbres de liaison (95), et sachant que,
par l'intermédiaire de deux arbres de liaison (95) respectifs, les deux transmissions latérales (94) retransmettent la rotation précitée aux dispositifs élévateurs (91), en particulier sur les écrous de broches desdits dispositifs élévateurs (91),
**caractérisé par le fait que**
l'unité de levage (90) comprend deux arbres de sortie (96)
couplés, respectivement, à l'une des transmissions latérales (94), étant précisé
que lesdits arbres de sortie (96) franchissent, à chaque fois, une ouverture prévue à cette fin dans le châssis intermédiaire (12).

2. Système mobile de transport (10) selon la revendication 1,
**caractérisé par le fait que**
les axes médians des broches des dispositifs élévateurs (91) s'étendent parallèlement les uns aux autres dans la direction verticale (Z).

3. Système mobile de transport (10) selon l'une des revendications précédentes, **caractérisé par le fait que**
les dispositifs élévateurs (91) sont pourvus d'un boîtier respectif, dans lequel les écrous de broches sont logés ; et **par le fait que**
les boîtiers desdits dispositifs élévateurs (91) sont, à chaque fois, reliés rigidement au châssis intermédiaire (12).

4. Système mobile de transport (10) selon l'une des revendications précédentes, **caractérisé par le fait**
**qu'**une bride respective de fixation est implantée aux extrémités des broches des dispositifs élévateurs (91) qui sont tournées à l'opposé du châssis intermédiaire (12) ; et par le fait que les brides de fixation desdits dispositifs élévateurs (91) sont fixées au châssis supérieur (18).

5. Système mobile de transport (10) selon l'une des revendications précédentes,
**caractérisé par le fait que**
le moteur de levage (92), la transmission centrale (93) et les transmissions latérales (94) sont, à chaque fois, reliés rigidement au châssis intermédiaire (12).

6. Système mobile de transport (10) selon l'une des revendications précédentes, **caractérisé par le fait que**
l'arbre mené du moteur de levage (92) tourne autour d'un axe qui s'étend, au moins approximativement, dans la direction longitudinale (X) et entraîne la transmission centrale (93) ; **par le fait que**
les transmissions latérales (94) sont respectivement couplées à ladite transmission centrale (93) par l'intermédiaire d'un arbre de liaison (95) ; **par le fait que**
les arbres de liaison (95) précités s'étendent à chaque fois, dans la direction transversale (Y), jusqu'auxdites transmissions latérales (94) à partir de la transmission centrale (93), et sont implantés sur des côtés opposés de ladite transmission centrale (93) ; **par le fait que**
lesdites transmissions latérales (94) sont couplées à chaque fois, par l'intermédiaire de deux arbres de liaison (95), à deux dispositifs respectifs au sein desdits dispositifs élévateurs (91) ; et **par le fait que**
les arbres de liaison (95) précités s'étendent à chaque fois, dans la direction longitudinale (X), jusqu'auxdits dispositifs élévateurs (91) à partir des transmissions latérales (94), et sont implantés sur des côtés opposés desdites transmissions latérales (94).

7. Système mobile de transport (10) selon l'une des revendications précédentes, **caractérisé par le fait que**
ledit système mobile de transport (10) inclut une capteur de courses, conçu pour détecter une course de l'unité de levage (90) et/ou des dispositifs élévateurs (91).

8. Système mobile de transport (10) selon l'une des revendications précédentes, **caractérisé par le fait que**
ledit système mobile de transport (10) est équipé d'une unité réceptrice (20) à laquelle de l'énergie peut être inductivement transférée par une unité de mise charge.
